# EUROPÄISCHE PATENTSCHRIFT

(11) **EP 2 917 076 B1**
(45) Veröffentlichungstag und Bekanntmachung des Hinweises auf die Patenterteilung: **27.05.2020**
(21) Anmeldenummer: 13783044.4
(22) Anmeldetag: 24.10.2013
(51) Int. Cl.: B60S 1/34, B60S 1/38

(54) **SCHEIBENWISCHVORRICHTUNG FÜR EIN FAHRZEUG**
WINDSCREEN WIPER DEVICE FOR A VEHICLE
DISPOSITIF ESSUIE-GLACE POUR UN VÉHICULE

(30) Priorität: 07.11.2012 DE 102012220209
(43) Veröffentlichungstag der Anmeldung: 16.09.2015
(73) Patentinhaber: Robert Bosch GmbH, 70442 Stuttgart (DE)
(72) Erfinder: VAN DE ROSTYNE, Kris, B-3360 Opvelp (BE); HAUSER, Florian, 77855 Achern (DE); WEILER, Michael, 77815 Buehl (DE)
(86) Internationale Anmeldenummer: PCT/EP2013/072282
(87) Internationale Veröffentlichungsnummer: WO 2014/072186

(56) Entgegenhaltungen:
- EP-A2- 0 930 207
- FR-A- 1 388 148
- GB-A- 1 425 568
- JP-U- H0 542 020
- US-A- 2 918 688
- US-A- 4 592 110

## Beschreibung

Die Erfindung betrifft eine Scheibenwischvorrichtung für ein Fahrzeug, insbesondere ein Kraftfahrzeug, mit einem langgestreckten Oberteil, einem langgestreckten Unterteil und mehreren voneinander beabstandeten Verbindungselementen zum Verbinden des Oberteils und des Unterteils.

### Stand der Technik

Scheibenwischvorrichtungen haben typischerweise einen Wischarm oder Wischhebel, wobei ein Wischblatt auf der Scheibe eines Kraftfahrzeugs o.ä. bewegt wird. Dabei wird das Wischblatt zwischen einer oberen Wendelage und einer unteren bewegt. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Dokument GB1425568 A offenbart eine Scheibenwischvorrichtung für ein Fahrzeug, die ein langgestrecktes Oberteil und ein langgestrecktes Unterteil aufweist. Das Oberteil ist mit dem Unterteil durch mehrere Verbindungselemente verbunden.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten.

Diese Aufgabe wird gelöst durch eine Scheibenwischvorrichtung mit den Merkmalen gemäß Anspruch 1.

Gemäß der vorliegenden Erfindung wird eine Scheibenwischvorrichtung für ein Fahrzeug, insbesondere ein Kraftfahrzeug, vorgeschlagen. Die Scheibenwischvorrichtung weist ein langgestrecktes Oberteil auf, das zumindest teilweise biegbar ausgestaltet ist. Ferner ist ein langgestrecktes Unterteil vorhanden, das zumindest teilweise biegbar ausgestaltet ist. Mehrere Verbindungselemente zum Verbinden des Oberteils und des Unterteils sind entlang einer Längserstreckung der Scheibenwischvorrichtung voneinander beabstandet und mittels Drehgelenken an dem Unterteil befestigt. Die erfindungsgemäße Scheibenwischvorrichtung ist so ausgestaltet, dass sie nach einem sogenannten Flossenstrahl-Prinzip aufgebaut ist. Dieses Flossenstrahl-Prinzip ist aus dem Aufbau von Flossen von bestimmten Fischen abgeleitet. Gemäß dem Flossenstrahl-Prinzip weicht das Unterteil der Scheibenwischvorrichtung, und vorteilhafterweise auch deren Oberteil, bei Auftreten einer Druckkraft auf das Unterteil nicht in Richtung der Druckkraft aus, sondern wölbt sich in die entgegengesetzte Richtung, d. h. in die Richtung, aus der die Druckkraft kommt.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Die vorliegende Erfindung und ihre Ausführungsformen ermöglichen vorteilhafterweise eine besonders gute Anpassung der Scheibenwischvorrichtung an die Krümmung einer Scheibe. Dies gewährleistet ein besonders gutes und exaktes Wischen der Scheibe. Nicht gewischte Bereiche der Scheibe und eine Schleierbildung auf der Scheibe können weitgehend vermieden werden. Die konstruktive Ausgestaltung der erfindungsgemäßen Scheibenwischvorrichtung ermöglicht vorteilhafterweise ein genaues Anpassen der Scheibenwischvorrichtung an innerhalb der Scheibe auftretende Krümmungsänderungen. Ein weitgehend gleichmäßiger Kontaktdruck auf die Scheibenwischvorrichtung, insbesondere auf ihr Unterteil, wird auch bei starken Krümmungen und Krümmungsänderungen der Scheibe erreicht. Gegenüber herkömmlichen Scheibenwischvorrichtungen ist es bei der erfindungsgemäßen Scheibenwischvorrichtung vorteilhafterweise nicht erforderlich, eine vorhergehende Einstellung des Oberteils und/oder des Unterteils an die Krümmung der zu wischenden Scheibe vorzunehmen. Die Anpassung an die Krümmung der Scheibe erfolgt bei der erfindungsgemäßen Scheibenwischvorrichtung schnell, unkompliziert und weitgehend selbstständig. Ein und dieselbe Scheibenwischvorrichtung ist daher einfachheitshalber für eine große Anzahl von Fahrzeugen einsetzbar.

Vorteilhafterweise ist die Scheibenwischvorrichtung so ausgestaltet, dass zwischen den Verbindungselementen und dem Unterteil Torsionsbewegungen möglich sind. Dies gewährleistet eine hohe Flexibilität und Anpassungsfähigkeit des Unterteils. Des Weiteren sind die Verbindungselemente in einer vorteilhaften Ausgestaltung der Erfindung mittels Drehgelenken ebenfalls an dem Oberteil befestigt. Dies gewährleistet eine noch bessere Anpassungsfähigkeit der Scheibenwischvorrichtung an die zu wischende Scheibe, wobei insbesondere ein hoher Anpressdruck auf die Scheibe, und damit eine besonders gute Reinigungs- und Wischwirkung, erzielbar ist. Besonders vorteilhaft ist die Scheibenwischvorrichtung so ausgestaltet, dass zwischen den Verbindungselementen und dem Oberteil ebenfalls Torsionsbewegungen möglich sind. Vorteilhafterweise sind die Drehgelenke Scharniere. Die erfindungsgemäße Scheibenwischvorrichtung ist insbesondere so ausgestaltet, dass Oberteil und Unterteil balkenförmig ausgestaltet sind. Des Weiteren ist es vorteilhafterweise möglich, dass Oberteil und Unterteil zumindest teilweise biegeelastisch sind. Gemäß einer Ausführungsform der Erfindung sind Ober- und Unterteil gegeneinander verschieblich. In einer weiteren Ausführungsform ist das Oberteil gegenüberliegend dem Unterteil angeordnet. Die Verbindungselemente sind an sich einander zugewandten Innenseiten des Ober- und -Unterteils befestigt. Besonders vorteilhaft sind die Verbindungselemente knicksteif ausgebildet.

Gemäß einer Ausführungsform der Erfindung sind das Oberteil und das Unterteil, insbesondere in einem Endbereich der Scheibenwischvorrichtung, an einer äußeren Verbindungsposition fest miteinander verbunden. Die äußere Verbindungsposition ist, insbesondere in eine in Längserstreckung der Scheibenwischvorrichtung von außen nach innen weisende Richtung betrachtet, vor den Verbindungselementen ausgebildet. Diese Ausgestaltung gewährleistet vorteilhafterweise eine besonders gute Stabilität der Scheibenwischvorrichtung. Ferner kann eine besonders hohe Flexibilität und Fähigkeit zum Anpassen an die Scheibenkrümmung erreicht werden, wobei ein gleichmäßiger Anpressdruck des Unterteils auf die Scheibe gegeben ist. In einer weiteren vorteilhaften Ausgestaltung können das Ober- und das Unterteil an der äußeren Verbindungsposition so miteinander verbunden sein, dass Ober- und Unterteil einen Keil bilden. Ober- und Unterteil sind insbesondere an ihren Enden miteinander verbunden. Gemäß weiteren Ausgestaltungen können ein oder mehrere erste Verbindungselement und ein oder mehrere zweites Verbindungselemente wie folgt zur Verfügung gestellt sein. Ein erstes Verbindungselement ist im Vergleich zu einem zweiten Verbindungselement derart angeordnet, dass das erste Verbindungselement relativ zum zweiten Verbindungsteil in Richtung der Verbindungsposition des Oberteils und des Unterteils liegt, d.h. in Richtung der Spitze des Keils bzw. außen liegt. Hierbei ist das erste Verbindungselement kürzer als das zweite Verbindungselement. Beispielsweise können zumindest 70 % oder zumindest 50% der Verbindungselemente derart ausgestaltet sein, dass sie nach außen, d.h. in Richtung der Verbindungsposition des Oberteils und des Unterteils, kürzer werden.

Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Gemäß einer weiteren Ausführungsform verlaufen die Längsachsen der Verbindungselemente in Winkeln zum Unterteil, die zwischen 65° und 115°, insbesondere zwischen 75° und 105°, liegen. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden. Besonders vorteilhaft liegen die Winkel zwischen 80° und 100°.

Gemäß einer weiteren Ausführungsform ist der Abstand zwischen jeweils zwei benachbarten Verbindungselementen kleiner als 50 mm, insbesondere kleiner als 30 mm. Dadurch ist eine besonders hohe Flexibilität der Scheibenwischvorrichtung, insbesondere ihres Unterteils, und gute Anpassung an die Krümmung und Krümmungsänderungen der zu wischenden Scheibe gewährleistet.

Gemäß einer weiteren typischen Ausführungsform ist das Oberteil ein- oder zweiteilig ausgebildet. Dadurch kann eine hohe Stabilität der Scheibenwischvorrichtung erreicht werden.

Gemäß einer weiteren vorteilhaften Ausführungsform ist eine biegbare Scheibenwischerlippe an einer Seite des Unterteils angebracht, die dem Oberteil abgewandt ist. Dadurch ist vorteilhafterweise eine besonders hohe Funktionalität der Scheibenwischvorrichtung gegeben.

Gemäß einer weiteren Ausführungsform ist das Unterteil mit einer Zugerzeugungseinrichtung zum Erzeugen einer auf das Unterteil, insbesondere in Richtung der Längserstreckung des Unterteils, wirkenden Zugkraft verbunden. Durch diese Ausgestaltung kann die Scheibenwischvorrichtung, insbesondere ihr Unterteil, besonders exakt an die Krümmung der Scheibe angelegt und angepasst werden. Die Zugkraft wird dabei insbesondere mittels der Verbindungselemente auf das Oberteil übertragen. Die Zugerzeugungseinrichtung kann beispielsweise mittels eines Aktuators zum Erzeugen von Längenkontraktionen realisiert sein. Dieser ist so angeordnet, dass die Längenkontraktionen auf das Unterteil wirken.

Gemäß einer weiteren Ausführungsform ist das Oberteil mit einer Druckerzeugungseinrichtung zum Erzeugen einer auf das Oberteil, insbesondere in Richtung der Längserstreckung des Oberteils, wirkenden Druckkraft verbunden. Dies ermöglicht ebenfalls ein besonders exaktes Anlegen und Anpassen der Scheibenwischvorrichtung an die Krümmung der Scheibe. Die Druckkraft wird dabei insbesondere mittels der Verbindungselemente auf das Unterteil übertragen. Die Druckerzeugungseinrichtung kann beispielsweise mittels eines Aktuators zum Erzeugen von Längenextraktionen realisiert sein, der so angeordnet ist, dass die Längenextraktionen auf das Oberteil wirken.

Gemäß einer weiteren Ausführungsform sind mehrere Aktuatoren zum Erzeugen von Längenkontraktionen und Längenextraktionen vorhanden, die in dem Unterteil entlang dessen Längserstreckung angeordnet sind. Dies ermöglicht ein besonders genaues Anlegen des Unterteils gerade an Scheiben, die eine schwierige Krümmung aufweisen, d. h. insbesondere Scheiben mit konvexen und konkaven Krümmungsbestandteilen. Vorteilhafterweise sind die Aktuatoren so ausgestaltet, dass sie in einem Bereich der Scheibe mit einer konvexen Krümmung kontrahieren und in einem Bereich der Scheibe mit einer konkaven Krümmung extrahieren. Die Aktuatoren können insbesondere von einem Steuermittel mittels geeigneter elektrischer Signale angesteuert werden. Dazu ist es vorteilhafterweise möglich, die zu wischende Scheibe vorab zu vermessen, um konvexe und konkave Krümmungsstellen festzustellen. Ein Modell der vermessenen Scheibe kann dann in dem Steuermittel hinterlegt sein. Alternativ oder zusätzlich ist es möglich, einen oder mehrere Sensoren vorzusehen, mit denen sich die Krümmung der Scheibe feststellen lässt. Die von den Sensoren gelieferten Informationen können für geeignete Ansteuersignale für die Aktuatoren eingesetzt werden.

Gemäß einer weiteren Ausführungsform ist zwischen dem Oberteil und dem Unterteil ein Zwischenraum ausgebildet, in dem ein Spoiler zum Beeinflussen einer in den Zwischenraum eindringenden Luftströmung angeordnet ist. Dadurch kann das genaue Wischen der Scheibe vorteilhafterweise weiter verbessert werden. Beispielsweise kann der Spoiler so ausgestaltet sein, dass gerade bei hohen Fahrgeschwindigkeiten des Fahrzeugs eine Kompensation einer Windauftriebskraft erfolgt, die ansonsten den Anpressdruck der Scheibenwischvorrichtung auf die Scheibe verringert. Der Spoiler kann ferner so ausgestaltet sein, dass ein Windauftrieb genutzt wird, um die Scheibenwischvorrichtung nach unten in Richtung der Scheibe zu drücken. Der Anpressdruck der Scheibenwischvorrichtung wird erhöht und ihr besonders genaues Anlegen auf die Krümmung der Scheibe gewährleistet.

Gemäß einer weiteren Ausführungsform ist zumindest ein biegbar ausgestalteter Teil des Unterteils mittels eines Materials gebildet, das einen Elastizitätsmodul hat, der in einem Bereich zwischen 0,005 kN/mm2 und 0,5 kN/mm2, insbesondere 0,01 kN/mm2 und 0,1 kN/mm2, liegt. Dadurch kann ein besonders biegefähiges und flexibles Unterteil erreicht werden.

### Kurze Beschreibung der Zeichnungen

Ausführungsbeispiele der Erfindung sind in den Figuren dargestellt und werden im Folgenden näher beschrieben. Es zeigen:
Figur 1A eine schematische Darstellung eines Ausführungsbeispiels einer erfindungsgemäßen Scheibenwischvorrichtung in Form eines Wischblatts in einer Grundstellung,
Figur 1B eine schematische Darstellung des Wischblatts nach Fig. 1A in einer an eine Scheibe angelegten Stellung,
Figur 2A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 2B eine schematische Darstellung des Wischerarms mit integriertem Wischblatt nach Fig. 2A in einer an eine Scheibe angelegten Stellung,
Figur 3A eine schematische Darstellung eines Ausschnitts des Wischblatts nach Fig. 2A,
Figur 3B eine schematische Darstellung eines Ausschnitts des Wischblatts nach Fig. 2B,
Figur 4A eine schematische Darstellung eines weiteren Ausführungsbeispiels einer erfindungsgemäßen Scheibenwischvorrichtung in einer Grundstellung mit einem Aktuator als Zugerzeugungseinrichtung,
Figur 4B eine schematische Darstellung der Scheibenwischvorrichtung nach Fig. 4A in einer an eine Scheibe angelegten Stellung,
Figur 5A eine schematische Darstellung eines Ausführungsbeispiels einer erfindungsgemäßen Scheibenwischvorrichtung in einer Grundstellung mit einem Aktuator als Druckerzeugungseinrichtung,
Figur 5B eine schematische Darstellung der Scheibenwischvorrichtung nach Fig. 5A in einer an eine Scheibe angelegten Stellung,
Figur 6A eine schematische Darstellung eines weiteren Ausführungsbeispiels einer erfindungsgemäßen Scheibenwischvorrichtung in einer Grundstellung mit einem Aktuator als Zugerzeugungseinrichtung und einem weiteren Aktuator als Druckerzeugungseinrichtung,
Figur 6B eine schematische Darstellung der Scheibenwischvorrichtung nach Fig. 6A in einer an eine Scheibe angelegten Stellung,
Figur 7A eine schematische Darstellung eines Ausführungsbeispiels einer erfindungsgemäßen Scheibenwischvorrichtung in einer Grundstellung mit mehreren Aktuatoren als Zug- und Druckerzeugungseinrichtungen, und
Figur 7B eine schematische Darstellung der Scheibenwischvorrichtung nach Fig. 7A in einer an eine Scheibe angelegten Stellung,
Figur 8A eine schematische Darstellung eines weiteren Ausführungsbeispiels einer erfindungsgemäßen Scheibenwischvorrichtung mit einem integrierten Spoiler und
Figur 8B eine schematische Darstellung eines Querschnitts durch die Scheibenwischvorrichtung nach Fig. 8A.

### Ausführungsformen der Erfindung

Im Folgenden werden, sofern nicht anders vermerkt, für gleiche und gleichwirkende Elemente gleiche Bezugszeichen verwendet.

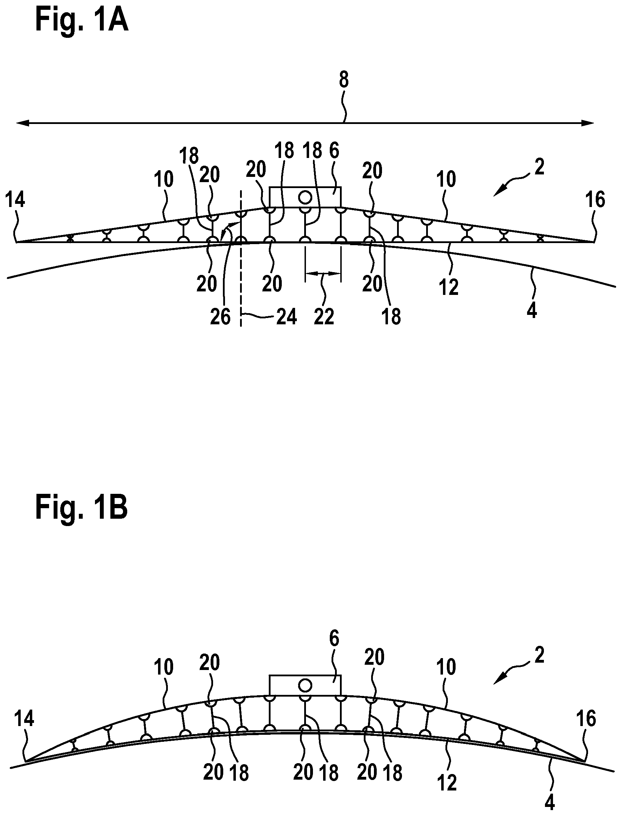

Figur 1 zeigt eine schematische Darstellung eines Ausführungsbeispiels einer erfindungsgemäßen Scheibenwischvorrichtung. Die Scheibenwischvorrichtung ist in diesem Ausführungsbeispiel ein Wischblatt 2. Das Wischblatt 2 dient zum Wischen einer Scheibe 4 eines Fahrzeugs, das hier ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 1 in einer Grundstellung, in der sie zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Großen und Ganzen der Längserstreckung 8 des Wischblatts 2. Sowohl das Oberteil 10 als auch das Unterteil 12 sind biegbare Balken, die hier jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, das Oberteil 8 zweiteilig ausgestaltet, wobei dann jeweils ein Ende der beiden Teile des zweiteiligen Oberteils 8 an der Halterung 6 befestigt sind. Um eine geeignete Biegefähigkeit des Oberteils 10 und des Unterteils 12 zu erhalten, wird für diese Teile 10, 12 ein Material eingesetzt, das einen Elastizitätsmodul hat, der in einem Bereich zwischen 0,005 kN/mm2 und 0,5 kN/mm2, insbesondere 0,01 kN/mm2 und 0,1 kN/mm2, liegt. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Drehgelenken 20 befestigt. Die Drehgelenke 20 sind hier Scharniere. Insbesondere können die Drehgelenke 20 als Filmscharniere ausgebildet sein. Dies ist vor allem dann vorteilhaft, wenn Oberteil 10, Unterteil 12 und/oder Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Im vorliegenden Ausführungsbeispiel ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln zum Unterteil 12 verlaufen, die zwischen 65° und 115°, insbesondere zwischen 75° und 105°, liegen. Besonders vorteilhaft liegen die Winkel zwischen 80° und 100°. Entsprechendes gilt im vorliegenden Ausführungsbeispiel für die Befestigungen der Verbindungselemente 18 an dem Oberteil 10. In der Fig. 1A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt. Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 1A einen Doppelkeil aus, wobei die Spitzen der beiden Keile in entgegengesetzte Richtungen weisen. Die Verbindungselemente sind knicksteif ausgeführt.

Fig. 1B zeigt eine schematische Darstellung des Wischblatts 2 nach Fig. 1A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an. In der Darstellung nach Fig. 1B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich an der dem Oberteil 10 abgewandten Unterseite des Unterteils 12 eine Gummilippe, die aus Gründen der Übersichtlichkeit nicht dargestellt ist und die zum Wischen auf der Scheibe 4 aufsetzt.

Eine solche Scheibenwischvorrichtung, zum Beispiel ein Scheibenwischarm oder Scheibenwischarm mit Scheibenwischblatt, hat den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet.

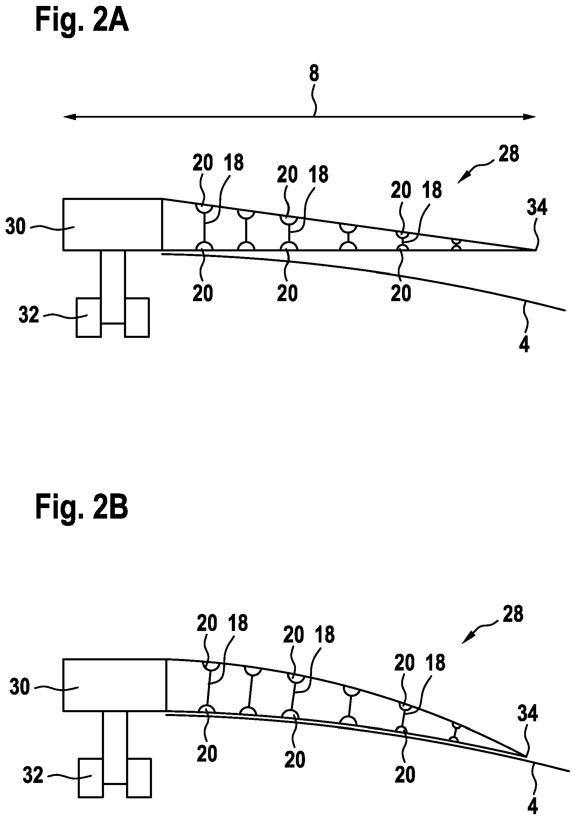

Figur 2A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 28, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 28 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 2A prinzipiell derjenigen nach Fig. 1A.

Fig. 2B zeigt eine schematische Darstellung des Wischblatts 28 mit integriertem Wischerarm 30 nach Fig. 2A in einer an die Scheibe 4 angelegten Stellung. Auch hier wirken von unten aus der Richtung der Scheibe 4 Druckkräfte auf das Unterteil 12 des Wischblatts 28, so dass sich das Unterteil 12 und das Oberteil 10 in Richtung der Scheibe 4 biegen.

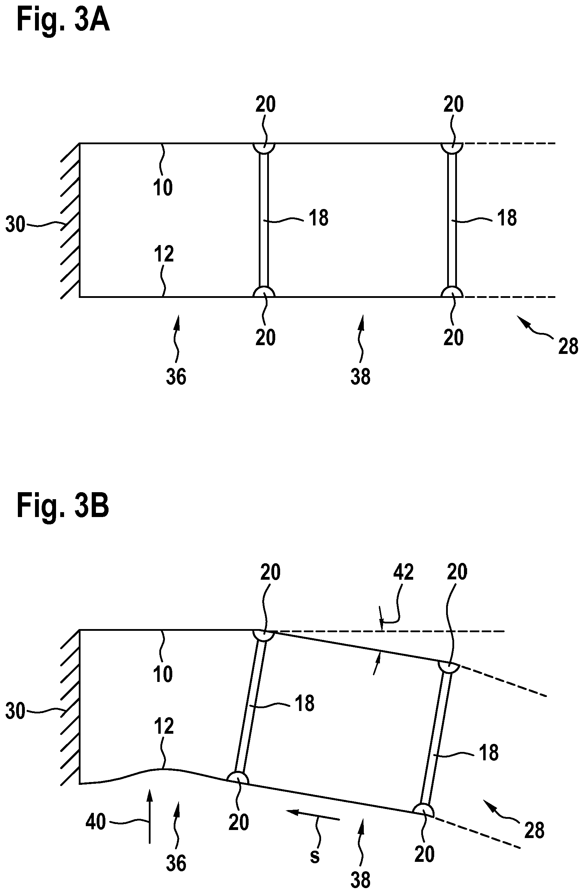

Fig. 3A zeigt eine schematische Darstellung eines Ausschnitts des Wischblatts 28 gemäß dem Ausführungsbeispiel nach Fig. 2A, in dem sich das Wischblatt 28 in der Grundstellung befindet. Dargestellt ist der linke Endbereich des Wischblatts 28, in dem ein Ende des Oberteils 10 und ein Ende des Unterteils 12 an dem Befestigungsteil 30 befestigt sind. Fig. 3A zeigt ausgehend von dem Übergang vom Befestigungsteil 30 zu dem Wischblatt 28 die ersten beiden Verbindungselemente 18, die zwei Wischblattelemente 36 und 38 begrenzen. Die Verbindungselemente 18 sind über Drehgelenke 20 an dem Oberteil 10 und dem Unterteil 12 befestigt.

Fig. 3B zeigt eine schematische Darstellung eines Ausschnitts des Wischblatts 28 gemäß dem Ausführungsbeispiel nach Fig. 2B, in dem das Wischblatt 28 an die Scheibe 4 angelegt ist. Es wirken von unten aus Richtung der Scheibe Druckkräfte auf das Unterteil 12. Stellvertretend für die Druckkräfte ist in der Fig. 3B eine Druckkraft 40 dargestellt. Die Druckkraft 40 bewirkt ein Wölben und Verbiegen des Unterteils 12 des Wischblattelements 36. Dadurch wird das Drehgelenk 20 des ersten Verbindungselements 18 um einen Weg s nach links verschoben. Das zweite Wischblattelement 38 biegt sich nach unten in die Richtung, aus der die Drucckraft 40 kommt, und schmiegt sich an die Scheibe an. Dabei entsteht zwischen dem ersten Wischblattelement 36 und dem zweiten Wischblattelement 38 ein Winkel 42. Ferner bildet sich eine weitere Druckkraft, die dann auf das Unterteil 12 des zweiten Wischblattelements 38 wirkt und ein weiteres Verbiegen des zweiten Wischblattelements 38 nach unten verhindert. Es entsteht eine Kettenreaktion zum rechten benachbarten Wischblattelement bis zum Ende des Wischblatts 28.

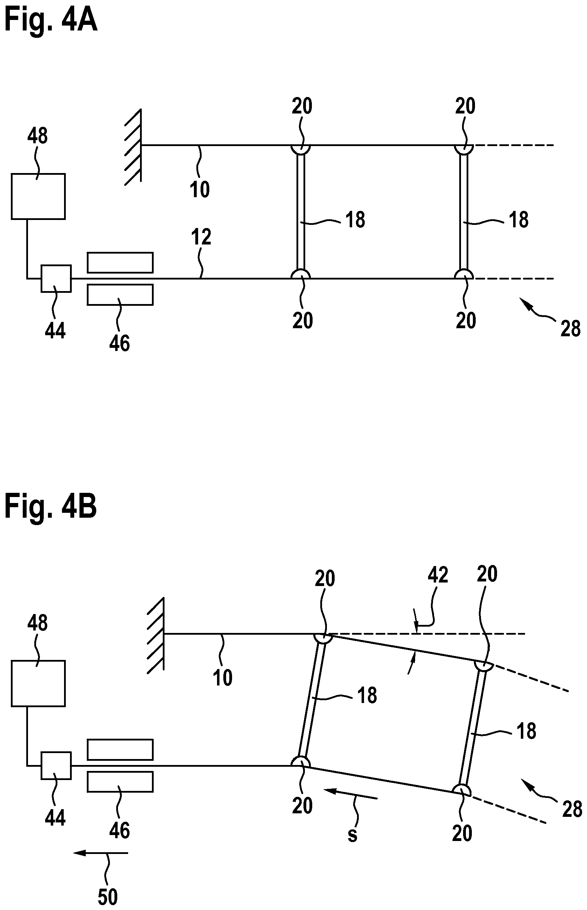

Fig. 4A eine schematische Darstellung eines weiteren Ausführungsbeispiels der Scheibenwischvorrichtung in einer Grundstellung mit einem Aktuator 44 als Zugerzeugungseinrichtung. Der Aktuator 44 ist mit dem linken Ende des Unterteils 12 verbunden, das in seinem Endbereich durch eine Führung 46 geführt ist. Der Aktuator 44 ist ein Piezo-Aktuator, der Längenkontraktionen ausführen kann. Dazu ist er mit einem Steuergerät 48 verbunden, das mittels geeigneter elektrischer Signal den Aktuator 44 ansteuert. Das Steuermittel 48 ist so ausgestaltet, dass es aufgrund der Krümmung der Scheibe die geeigneten Ansteuersignale für den Aktuator 44 bestimmt. Bei einer solchen Kontraktion wird auf das Unterteil 12 eine Zugkraft 50 in Längserstreckung 8 der Scheibenwischvorrichtung ausgeübt. Das ist in Fig. 4B dargestellt. Durch die Zugkraft 50 wird prinzipiell die gleiche Kettenreaktion ausgeführt, die bereits oben in Verbindung mit Fig. 3B beschrieben wurde.

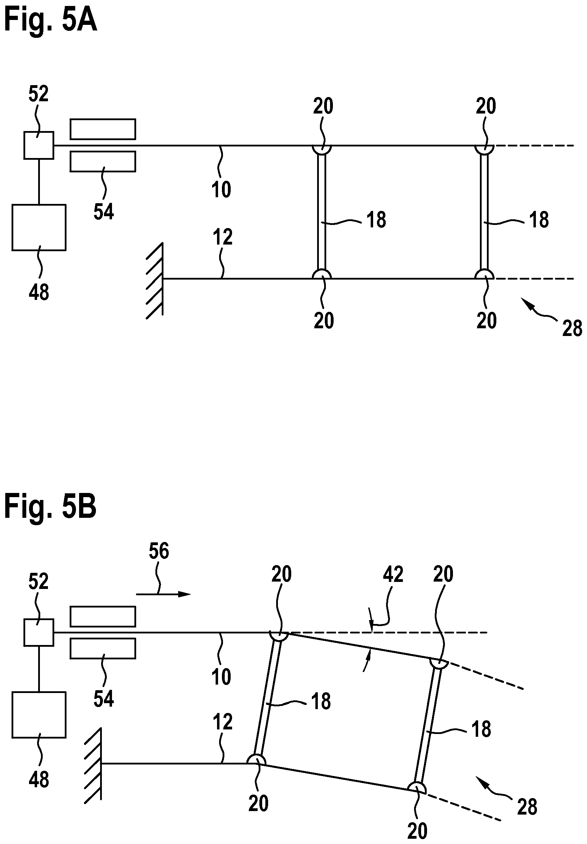

Fig. 5A zeigt eine schematische Darstellung eines Ausführungsbeispiels der erfindungsgemäßen Scheibenwischvorrichtung in einer Grundstellung mit einem Aktuator 52 als Druckerzeugungseinrichtung. Der Aktuator 52 ist mit dem linken Ende des Oberteils 10 verbunden, das in seinem Endbereich durch eine Führung 54 geführt ist. Der Aktuator 52 kann Längenextraktionen ausführen. Dazu ist er mit dem Steuergerät 48 verbunden, das mittels geeigneter elektrischer Signal den Aktuator 52 ansteuert. Bei einer Extraktion des Aktuators 52 wird auf das Oberteil 10 eine Druckkraft 56 in Längserstreckung 8 der Scheibenwischvorrichtung ausgeübt. Das ist in Fig. 5B dargestellt. Durch die Druckkraft 50 werden das Oberteil 10 und das Unterteil 12 nach unten in Richtung der Scheibe gebogen. Die Druckkraft 50 wird über die Verbindungselemente 18 auf das Unterteil 12 übertragen. Es wird prinzipiell die gleiche Kettenreaktion ausgeführt, die bereits oben in Verbindung mit Fig. 3B beschrieben wurde.

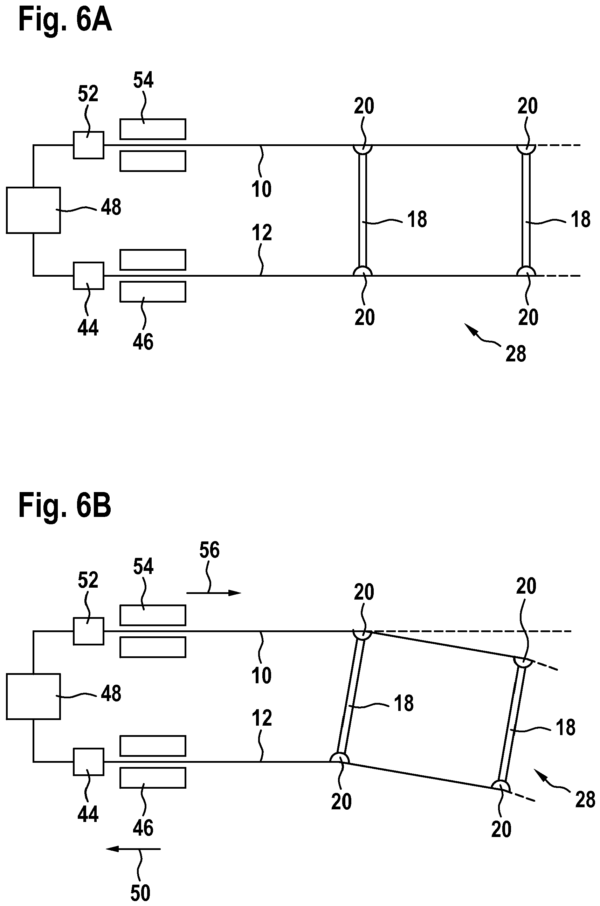

Fig. 6A und 6B zeigen schematische Darstellungen eines Ausführungsbeispiels der Scheibenwischvorrichtung mit dem Aktuator 44 als Zugerzeugungseinrichtung und dem Aktuator 50 als Druckerzeugungseinrichtung. Dieses Ausführungsbeispiel stellt eine Kombination der beiden Ausführungsbeispiele nach Fig. 4A, B und Fig. 5A, B dar.

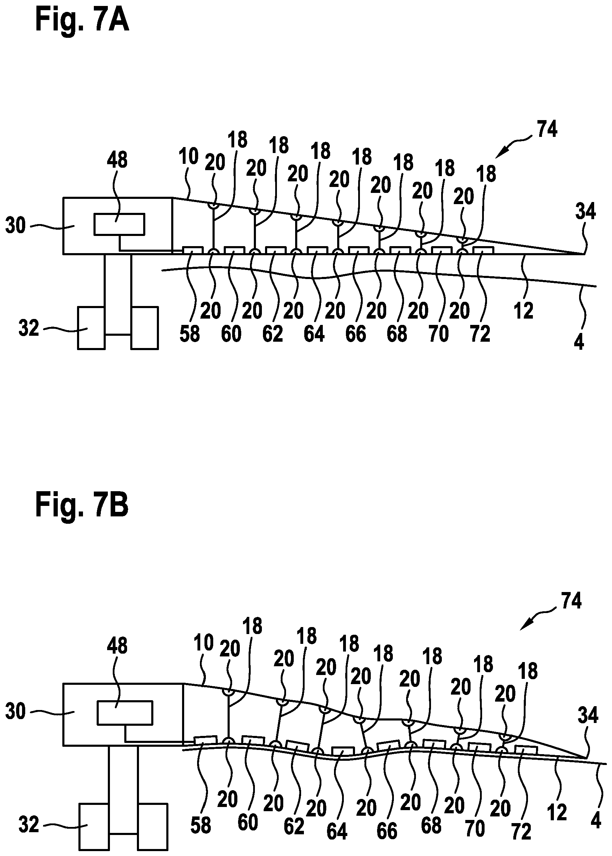

Fig. 7A, B zeigen schematische Darstellungen eines Ausführungsbeispiels der erfindungsgemäßen Scheibenwischvorrichtung mit mehreren Aktuatoren 58 bis 72 als Zug- und Druckerzeugungseinrichtungen. Fig. 7A zeigt die Scheibenwischvorrichtung in der Grundstellung und Fig. 7B in der an die Scheibe 4 angelegten Stellung. Die Scheibenwischvorrichtung enthält ein Wischblatt 74, das mit dem Befestigungsteil 30 verbunden ist. Die Aktuatoren 58-72 sind in dem Unterteil 12 entlang dessen Längserstreckung angeordnet und können Längenkontraktionen oder Längenextraktionen durchführen. Dazu sind sie mit dem Steuergerät 48 verbunden, das die Aktuatoren 58-72 mit geeigneten Ansteuersignalen versorgt. In den Fig. 7A, B sind aus Gründen der Übersichtlichkeit beispielhaft jeweils nur eine Verbindung von dem Steuergerät 48 zu dem ersten Aktuator 58 dargestellt. Der erste Aktuator ist zwischen dem Befestigungsteil 30 und dem ersten Verbindungselement 18 und der letzte Aktuator 72 zwischen dem letzten Verbindungselement 18 und dem Ende des Wischblatts 74, d. h. der äußeren Verbindungsposition 34, angeordnet. Die übrigen Aktuatoren 60-70 befinden sich zwischen benachbarten Verbindungselementen 18. Auf diese Weise ist im Unterteil 12 eines jeden Elements oder Teilbereichs des Wischblatts 74 ein Aktuator 58-72 angeordnet. Die Scheibe 4 hat hier mitunter starke konkave und konvexe Krümmungsbestandteile. In einem konvexen Krümmungsbereich kontrahieren die Aktuatoren 58-72 und in einem konkaven Krümmungsbereich extrahieren die Aktuatoren 58-72. Im Ausführungsbeispiel nach Fig. 7B hat der Aktuator 64 extrahiert, während die übrigen Aktuatoren 58-62, 66-72 kontrahiert haben.

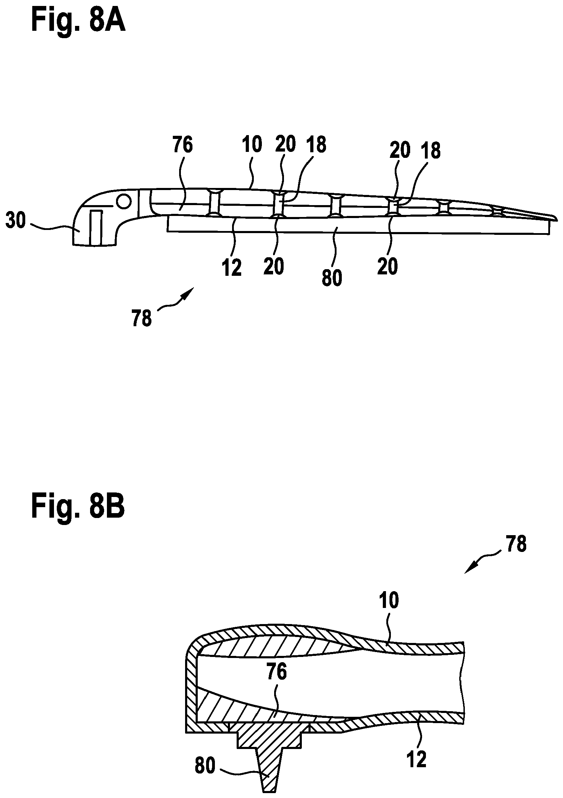

Fig. 8A zeigt eine schematische Darstellung eines Ausführungsbeispiels der erfindungsgemäßen Scheibenwischvorrichtung mit einem integrierten Spoiler 76. Die Scheibenwischvorrichtung weist ein Wischblatt 78 auf, an dessen Unterteil 12 zum Wischen der Scheibe eine Gummilippe 80 angebracht ist. Der Spoiler 76 ist in einen Zwischenraum 82 integriert, der zwischen dem Oberteil 10 und dem Unterteil 12 ausgebildet ist. Der Spoiler 76 dient zum Beeinflussen einer in den Zwischenraum 82 eindringenden Luftströmung. Der Spoiler 76 ist als Schräge realisiert, die an dem Unterteil 12 des Wischblatts 78 ausgebildet ist. Der Spoiler 76 kann beispielsweise aus Gummi hergestellt werden, das um eine geeignete Wischblattstruktur, z. b. aus Blech, gespritzt ist.

Fig. 8B zeigt eine schematische Darstellung eines Querschnitts durch das Wischblatt 78 nach Fig. 8A.

## Patentansprüche

1. Scheibenwischvorrichtung (2; 28, 30; 74; 78) für ein Fahrzeug, insbesondere ein Kraftfahrzeug, mit
- einem langgestreckten Oberteil (10), das zumindest teilweise biegbar ausgestaltet ist,
- einem langgestreckten Unterteil (12), das zumindest teilweise biegbar ausgestaltet ist, und
- mehreren Verbindungselementen (18) zum Verbinden des Oberteils (10) und des Unterteils (12), wobei die Verbindungselemente (18) entlang einer Längserstreckung (8) der Scheibenwischvorrichtung (2; 28, 30; 74; 78) voneinander beabstandet sind, **dadurch gekennzeichnet, dass** die Verbindungselemente (18) mittels Drehgelenken (20) an dem Unterteil (12) befestigt sind, und dass die Scheibenwischvorrichtung (2; 28, 30; 74; 78) nach dem Flossenstrahl-Prinzip aufgebaut ist, wonach das Unterteil (12) der Scheibenwischvorrichtung, und vorteilhafterweise auch deren Oberteil (10), bei Auftreten einer Druckkraft auf das Unterteil nicht in Richtung der Druckkraft ausweicht, sondern wölbt sich in die entgegengesetzte Richtung.

2. Scheibenwischvorrichtung nach Anspruch 1, **dadurch gekennzeichnet, dass** das Oberteil (10) und das Unterteil (12), insbesondere in einem Endbereich der Scheibenwischvorrichtung (2; 28, 30; 74; 78), an einer äußeren Verbindungsposition (14, 16; 34) fest miteinander verbunden sind, wobei die äußere Verbindungsposition (14, 16; 34) insbesondere in eine in Längserstreckung (8) der Scheibenwischvorrichtung (2; 28, 30; 74; 78) von außen nach innen weisende Richtung betrachtet, vor den Verbindungselementen (18) ausgebildet ist.

3. Scheibenwischvorrichtung nach Anspruch 1 oder 2, **dadurch gekennzeichnet, dass** die Längsachsen (24) der Verbindungselemente (18) in Winkeln (26) zum Unterteil (12) verlaufen, die zwischen 65° und 115°, insbesondere zwischen 75° und 105°, liegen.

4. Scheibenwischvorrichtung nach einem der Ansprüche 1 bis 3, **dadurch gekennzeichnet, dass** ein Abstand (22) zwischen jeweils zwei benachbarten Verbindungselementen (18) kleiner als 50 mm, insbesondere kleiner als 30 mm, ist.

5. Scheibenwischvorrichtung nach einem der Ansprüche 1 bis 4, **dadurch gekennzeichnet, dass** das Oberteil (10) ein- oder zweiteilig ausgebildet ist.

6. Scheibenwischvorrichtung nach einem der Ansprüche 1 bis 5, **dadurch gekennzeichnet, dass** eine biegbare Scheibenwischerlippe (80) an einer Seite des Unterteils (12) angebracht ist, die dem Oberteil (10) abgewandt ist.

7. Scheibenwischvorrichtung nach einem der Ansprüche 1 bis 6, **dadurch gekennzeichnet, dass** das Unterteil (12) mit einer Zugerzeugungseinrichtung (44) zum Erzeugen einer auf das Unterteil (12), insbesondere in Richtung der Längserstreckung des Unterteils (12), wirkenden Zugkraft (50) verbunden ist.

8. Scheibenwischvorrichtung nach einem der Ansprüche 1 bis 7, **dadurch gekennzeichnet, dass** das Oberteil (10) mit einer Druckerzeugungseinrichtung (52) zum Erzeugen einer auf das Oberteil (10), insbesondere in Richtung der Längserstreckung des Oberteils (10), wirkenden Druckkraft (56) verbunden ist.

9. Scheibenwischvorrichtung nach einem der Ansprüche 1 bis 8, **dadurch gekennzeichnet, dass** mehrere Aktuatoren (58-72) zum Erzeugen von Längenkontraktionen und Längenextraktionen vorhanden sind, die in dem Unterteil (12) entlang dessen Längserstreckung angeordnet sind.

10. Scheibenwischvorrichtung nach einem der Ansprüche 1 bis 9, **dadurch gekennzeichnet, dass** zwischen dem Oberteil (10) und dem Unterteil (12) ein Zwischenraum (82) ausgebildet ist, in dem ein Spoiler (76) zum Beeinflussen einer in den Zwischenraum (82) eindringenden Luftströmung angeordnet ist.

## Claims

1. Windscreen wiper device (2; 28, 30; 74; 78) for a vehicle, in particular a motor vehicle, having
- an elongate upper part (10), which is at least partially of flexible form,
- an elongate lower part (12), which is at least partially of flexible form, and
- a plurality of connecting elements (18) for connecting the upper part (10) and the lower part (12), wherein the connecting elements (18) are spaced apart from one another along a longitudinal extent (8) of the windscreen wiper device (2; 28, 30; 74; 78), **characterized in that** the connecting elements (18) are fastened to the lower part (12) by means of rotary joints (20), and **in that** the windscreen wiper device (2; 28, 30; 74; 78) is constructed according to the fin ray principle, according to which the lower part (12) of the windscreen wiper device, and advantageously also the upper part (10) thereof, when a compressive force occurs on the lower part does not yield in the direction of the compressive force, but rather arches in the opposite direction.

2. Windscreen wiper device according to Claim 1, **characterized in that** the upper part (10) and the lower part (12) are fixedly connected to each other at an outer connecting position (14, 16; 34), in particular in an end region of the windscreen wiper device (2; 28, 30; 74; 78), wherein the outer connecting position (14, 16; 34) is formed in front of the connecting elements (18), in particular as viewed in a direction pointing from the outside inwards in the longitudinal extent (8) of the windscreen wiper device (2; 28, 30; 74; 78).

3. Windscreen wiper device according to Claim 1 or 2, **characterized in that** the longitudinal axes (24) of the connecting elements (18) run at angles (26) with respect to the lower part (12), said angles being between 65° and 115°, in particular between 75° and 105°.

4. Windscreen wiper device according to one of Claims 1 to 3, **characterized in that** a distance (22) between in each case two adjacent connecting elements (18) is smaller than 50 mm, in particular smaller than 30 mm.

5. Windscreen wiper device according to one of Claims 1 to 4, **characterized in that** the upper part (10) is formed in one or two parts.

6. Windscreen wiper device according to one of Claims 1 to 5, **characterized in that** a bendable windscreen wiper lip (80) is attached to a side of the lower part (12) that faces away from the upper part (10).

7. Windscreen wiper device according to one of Claims 1 to 6, **characterized in that** the lower part (12) is connected to a tension-generating device (44) for generating a tensile force (50) which acts on the lower part (12), in particular in the direction of the longitudinal extent of the lower part (12).

8. Windscreen wiper device according to one of Claims 1 to 7, **characterized in that** the upper part (10) is connected to a pressure-generating device (52) for generating a compressive force (56) acting on the upper part (10), in particular in the direction of the longitudinal extent of the upper part (10).

9. Windscreen wiper device according to one of Claims 1 to 8, **characterized in that** there is a plurality of actuators (58-72) for producing length contractions and length extractions, which actuators are arranged in the lower part (12) along the longitudinal extent thereof.

10. Windscreen wiper device according to one of Claims 1 to 9, **characterized in that** an intermediate space (82) is formed between the upper part (10) and the lower part (12), in which intermediate space a spoiler (76) is arranged for influencing an airflow penetrating the intermediate space (82) .

## Revendications

1. Dispositif d'essuie-glace (2 ; 28, 30 ; 74 ; 78) pour un véhicule, en particulier un véhicule automobile, comprenant
- une partie supérieure allongée (10) qui est configurée de manière au moins partiellement flexible,
- une partie inférieure allongée (12) qui est configurée de manière au moins partiellement flexible, et
- plusieurs éléments de liaison (18) pour raccorder la partie supérieure (10) et la partie inférieure (12), les éléments de liaison (18) étant espacés les uns des autres le long d'une étendue longitudinale (8) du dispositif d'essuie-glace (2 ; 28, 30 ; 74 ; 78),
**caractérisé en ce que** les éléments de liaison (18) sont fixés au moyen d'articulations pivotantes (20) à la partie inférieure (12), et **en ce que** le dispositif d'essuie-glace (2 ; 28, 30 ; 74 ; 78) est construit suivant le principe des rayons de nageoires, selon lequel la partie inférieure (12) du dispositif d'essuie-glace, et avantageusement également sa partie supérieure (10), lors de l'application d'une force de pression sur la partie inférieure, ne s'écarte pas dans la direction de la force de pression, mais fléchit dans la direction opposée.

2. Dispositif d'essuie-glace selon la revendication 1, **caractérisé en ce que** la partie supérieure (10) et la partie inférieure (12), en particulier dans une région d'extrémité du dispositif d'essuie-glace (2 ; 28, 30 ; 74 ; 78), sont raccordées fixement l'une à l'autre au niveau d'une position de raccordement extérieure (14, 16 ; 34), la position de raccordement extérieure (14, 16 ; 34), en particulier vu dans une direction orientée de l'extérieur vers l'intérieur dans une étendue longitudinale (8) du dispositif d'essuie-glace (2 ; 28, 30 ; 74 ; 78), étant réalisée avant les éléments de liaison (18).

3. Dispositif d'essuie-glace selon la revendication 1 ou 2, **caractérisé en ce que** les axes longitudinaux (24) des éléments de liaison (18) s'étendent par rapport à la partie inférieure (12) suivant des angles (26) qui sont situés entre 65° et 115°, en particulier entre 75° et 105°.

4. Dispositif d'essuie-glace selon l'une quelconque des revendications 1 à 3, **caractérisé en ce qu'**une distance (22) à chaque fois entre deux éléments de liaison adjacents (18) est inférieure à 50 mm, en particulier inférieure à 30 mm.

5. Dispositif d'essuie-glace selon l'une quelconque des revendications 1 à 4, **caractérisé en ce que** la partie supérieure (10) est réalisée en une ou deux parties.

6. Dispositif d'essuie-glace selon l'une quelconque des revendications 1 à 5, **caractérisé en ce qu'**une lèvre d'essuie-glace flexible (80) est montée au niveau d'un côté de la partie inférieure (12) qui est opposé à la partie supérieure (10).

7. Dispositif d'essuie-glace selon l'une quelconque des revendications 1 à 6, **caractérisé en ce que** la partie inférieure (12) est raccordée à un dispositif de génération de traction (44) pour générer une force de traction (50) agissant sur la partie inférieure (12), en particulier dans la direction d'étendue longitudinale de la partie inférieure (12) .

8. Dispositif d'essuie-glace selon l'une quelconque des revendications 1 à 7, **caractérisé en ce que** la partie supérieure (10) est raccordée à un dispositif de génération de pression (52) pour générer une force de pression (56) agissant sur la partie supérieure (10), en particulier dans la direction de l'étendue longitudinale de la partie supérieure (10).

9. Dispositif d'essuie-glace selon l'une quelconque des revendications 1 à 8, **caractérisé en ce que** plusieurs actionneurs (58-72) sont prévus pour générer des contractions longitudinales et des extensions longitudinales, lesquels sont disposés dans la partie inférieure (12) le long de son étendue longitudinale.

10. Dispositif d'essuie-glace selon l'une quelconque des revendications 1 à 9, **caractérisé en ce qu'**entre la partie supérieure (10) et la partie inférieure (12) est réalisé un espace intermédiaire (82) dans lequel est disposé un déflecteur (76) pour influencer un écoulement d'air pénétrant dans l'espace intermédiaire (82).
